# EUROPEAN PATENT APPLICATION

(11) **EP 4 539 147 A1**
(43) Date of publication of application: **16.04.2025**
(21) Application number: 23912712.9
(22) Date of filing: 18.12.2023
(51) Int. Cl.: H01M 4/134, H01M 4/62, H01M 4/38, H01M 4/587, H01M 4/48, H01M 4/133, H01M 4/131, H01M 10/052, H01M 4/02

(54) **ELECTRODE COMPOSITION, MANUFACTURING METHOD THEREFOR, ELECTRODE SLURRY, ELECTRODE, AND LITHIUM SECONDARY BATTERY**

(30) Priority: 26.12.2022 KR 20220184163; 15.12.2023 KR 20230182639
(71) Applicant: LG Energy Solution, Ltd., Seoul 07335 (KR)
(72) Inventor: KO, Minjin, Daejeon 34122 (KR); KWON, Yohan, Daejeon 34122 (KR); KIM, Young Jae, Daejeon 34122 (KR); PARK, Su Jin, Daejeon 34122 (KR); LEE, Sangmin, Daejeon 34122 (KR); LEE, Jaewook, Daejeon 34122 (KR)
(74) Representative: Hoffmann Eitle
(86) International application number: PCT/KR2023/020859
(87) International publication number: WO 2024/144037

(57) **Abstract**

Disclosed is an electrode composition including an electrode active material, a conductive material, and a binder, in which the binder is composed of a linear polymer and the pH is 5 or more and 7 or less when measured at 25°C, an electrode slurry including the same, an electrode, a lithium secondary battery, and a method for preparing the electrode composition. The electrode composition provides an advantage of simultaneously preventing the generation of hydrogen gas due to surface oxidation reactions during the preparation and storage of the polymer binder-containing electrode composition and/or electrode slurry while providing an advantage of achieving excellent adhesion strength by adjusting the pH of the polymer binder itself.

## Description

### [Technical Field]

This application claims priority to and the benefit of Korean Patent Application Nos. 10-2022-0184163 and 10-2023-0182639 filed in the Korean Intellectual Property Office on December 26, 2022 and December 15, 2023, respectively, the entire contents of which are incorporated herein by reference.

The present application relates to an electrode composition, a preparation method thereof, an electrode slurry, an electrode, and a lithium secondary battery.

### [Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-containing particle having high discharge capacity may be used.

In particular, recently, in response to the demand for a high-density energy battery, studies have been actively conducted on a method for increasing the capacity by together using a silicon-containing compound such as Si/C or SiOx, which has a 10-fold higher capacity than a graphite-based material, as a negative electrode active material. Although silicon-containing compounds, which are high-capacity materials, provide an advantage of having large capacity when compared to graphite, which is used in the related art, there is a problem in that hydrogen gas may be generated due to surface oxidation reactions during the preparation and storage of silicon-containing compound-containing electrode compositions or slurries, resulting in explosion risk and reduction in phase stability.

In order to solve the problem, various methods have been discussed, but in the case of the methods, the performance of the battery may rather deteriorate, so that there is still a limitation in commercializing of the manufacture of negative electrode batteries containing silicon-containing compounds.

Therefore, there is a need for additional research on a binder which includes a silicon-containing compound and can reduce the generation of hydrogen gas from the silicon-containing compound so as to ameliorate the above-described problem while maintaining the performance of a battery.

### [Detailed Description of the Invention]

### [Technical Problem]

In order to solve the problem, the present application has been made in an effort to provide an electrode composition in which the hydrogen ion concentration (pH) is adjusted and a specific form of binder is included, a preparation method thereof, an electrode slurry, an electrode, and a lithium secondary battery.

### [Technical Solution]

An exemplary embodiment of the present specification provides an electrode composition including: an electrode active material, a conductive material, and a binder, wherein the binder is composed of a linear polymer and the binder has a pH in a range of 5 or more and 7 or less at 25°C.

The binder may comprise a first monomer and a second monomer, the first monomer may comprise (meth)acrylic acid, and the second monomer may comprise one or more selected from the group consisting of (meth)acrylamide and (meth)acrylonitrile.

A molar ratio of the first monomer to the second monomer may be 2:8 to 8:2.

The electrode active material may be comprised in an amount of 60 parts by weight or more based on 100 parts by weight of the electrode composition.

The electrode active material may comprise one or more selected from the group consisting of a silicon-containing active material and a carbon-containing active material.

The silicon-containing active material may comprise one or more selected from the group consisting of SiOx, wherein x=0, SiOx, wherein 0<x<2, SiC, and a Si alloy.

The electrode active material may comprise the silicon-containing active material, and the silicon-containing active material may comprise one or more selected from the group consisting of 70 parts by weight or more of SiOx, wherein x=0, based on 100 parts by weight of the silicon-containing active material, and SiOx, wherein 0<x<2.

The carbon-containing active material may comprise one or more selected from the group consisting of artificial graphite, natural graphite, hard carbon, and soft carbon.

The conductive material may be comprised in an amount of 0.03 parts by weight or more and 40 parts by weight or less based on 100 parts by weight of the electrode composition.

The conductive material may comprise one or more selected from the group consisting of a dotted conductive material, a planar conductive material, and a linear conductive material.

The binder may be comprised in an amount of 2 parts by weight or more and 30 parts by weight or less based on 100 parts by weight of the electrode composition.

The binder may have a weight average molecular weight of 100,000 g/mol or more and 1,500,000 g/mol or less.

The binder may comprise a water-based binder.

Another exemplary embodiment provides an electrode slurry including the electrode composition and a solvent.

Still another exemplary embodiment provides an electrode including: an electrode current collector layer; and an electrode active material layer comprising the electrode slurry on one surface or both surfaces of the electrode current collector layer.

Yet another exemplary embodiment provides a lithium secondary battery including: a first electrode, a second electrode, a separator provided between the first electrode and the second electrode; and an electrolyte, in wherein the first electrode or the second electrode is the electrode.

Finally, provided is a method for preparing the electrode composition, the method including: preparing the binder, adjusting the pH of the binder to be in the range of 5 or more and 7 or less using a base, and preparing the electrode composition by adding the electrode active material and the conductive material to the binder and mixinge.

### [Advantageous Effects]

The electrode composition according to an exemplary embodiment of the present invention can provide an effect of preventing the generation of hydrogen gas due to surface oxidation reactions during the preparation and storage of an electrode composition (or an electrode slurry including a solvent) by allowing the form of a binder to be composed of a linear polymer and adjusting the hydrogen ion concentration (pH) of the binder itself. As a result, the electrode composition (or electrode slurry) including the binder can effectively reduce the risk of explosion due to the generation of hydrogen gas. In addition, the electrode composition has an excellent capacity retention rate when used in lithium secondary batteries by improving the phase stability of the electrode composition.

The method for preparing an electrode composition according to another exemplary embodiment of the present invention can further secure process stability, stability, and the like because the electrode composition having the aforementioned characteristics is used.

### [Brief Description of Drawings]

FIG. 1 is a photograph of a state after a certain period of time has passed after an electrode including an electrode composition according to an exemplary embodiment of the present application is stored.
FIG. 2 is a photograph of a state after a certain period of time has passed after an electrode including an electrode composition in the related art is stored.

### [Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

### <Electrode composition>

An exemplary embodiment of the present specification is characterized in that a binder of an electrode composition is composed of a linear polymer, and the pH of the binder is controlled to be 5 or more and 7 or less when measured at 25°C.

In the electrode composition according to the exemplary embodiment, as the binder is composed of a linear polymer, direct contact with an electrode active material is facilitated, so that the content of conductive material may be relatively reduced because conductivity may be further improved, thereby increasing the content of the electrode active material. Further, dispersibility (particularly, water dispersibility) may be effectively improved compared to when the binder is composed of or includes a cyclic polymer. In addition, the electrode composition including the binder may improve the stability of an electrode or lithium secondary battery in the future by adjusting the pH of the binder to improve the adhesion strength of the binder and preventing the bond between the electrode active material and/or the conductive material from loosening during the repeated charging/discharging process. Furthermore, according to the exemplary embodiments, by adjusting the pH of the binder itself, it is possible to provide an effect of significantly reducing the generation amount of hydrogen gas occurring due to surface oxidation reactions during the preparation and storage of an electrode composition including the binder and an electrode slurry including the same.

In the present specification, the pH may be measured using a known pH meter, and for example, a pH meter SD20 manufactured by Mettler-Toledo Co., Ltd. may be used.

As the pH adjusting method, a known method is used, but preferably, the concentration (for example: molar concentration (M)) of a strong base such as NaOH or KOH, a weak base such as ammonium hydroxide, a strong acid such as HCl, or a weak acid such as acetic acid may be adjusted and the acid or base may be added dropwise to the binder using a pH meter until a desired pH is reached.

In the present specification, the pH of the binder itself falls within a range of 5 or more and 7 or less, but the pH of the electrode composition including the binder may be slightly out of the range of 5 or more and 7 or less. For example, the pH of the electrode composition may be 5 or more and 8 or less, preferably 5 or more and 7.5 or less, but is not limited thereto.

In an exemplary embodiment of the present specification, the binder includes a first monomer and a second monomer, the first monomer is (meth)acrylic acid, and the second monomer may be (meth)acrylamide, (meth)acrylonitrile, or a combination thereof.

In the electrode composition according to the exemplary embodiments, the binder may exhibit hydrophilicity, which is essential as an aqueous binder in the future. In addition, when the electrode composition including the binder is used for a lithium secondary battery by allowing the binder to have properties that make it difficult to be dissolved in an electrolyte used in the lithium secondary battery, strong stress or tensile strength may be imparted. In particular, when a silicon-containing active material is included in the electrode composition, it is possible to effectively suppress problems caused by volume expansion and contraction during charging and discharging, which the silicon-containing active material has.

In the present specification, the term "(meth) acrylic ..." may mean both methacrylic ... and/or acrylic ....

In an exemplary embodiment of the present specification, the molar ratio of the first monomer to the second monomer may be 2:8 to 8:2, preferably 3:7 to 7:3.

As the electrode composition according to the exemplary embodiment satisfies the above molar ratio, water dispersibility may be further improved, and service life performance may be further improved.

In an exemplary embodiment of the present specification, the electrode active material may be included in an amount of 60 parts by weight or more based on 100 parts by weight of the electrode composition.

In another exemplary embodiment of the present specification, the electrode active material may be included in an amount of 60 parts by weight or more, preferably 65 parts by weight or more, more preferably 70 parts by weight or more, and 95 parts by weight or less, preferably 90 parts by weight or less, based on 100 parts by weight of the electrode composition.

In an exemplary embodiment of the present specification, the electrode active material may include one or more selected from the group consisting of a silicon-containing active material and a carbon-containing active material.

In another exemplary embodiment of the present specification, the electrode active material may be composed of a silicon-containing active material and a carbon-containing active material.

In the present specification, the silicon-containing active material has a 10-fold higher capacity than the carbon-containing active material, and accordingly, when the silicon-containing active material is applied to an electrode, particularly a negative electrode, it is possible to implement an electrode with a higher level of energy density even with a thinner thickness than when the carbon-containing active material is included alone.

In another exemplary embodiment of the present specification, when the electrode active material is composed of a silicon-containing active material and a carbon-containing active material, the composition ratio between the silicon-containing active material and the carbon-containing active material may be in a range of 2 : 98 to 30 : 70.

The electrode active material according to the exemplary embodiment includes a carbon-containing active material as a main component, and thus may further provide an effect in which swelling slightly occurs due to the small volume expansion of the active material during charging and discharging and the conductive connectivity of the electrode is excellent.

In still another exemplary embodiment of the present specification, the electrode composition means a negative electrode composition, and accordingly, the electrode active material; the conductive material; and the binder are all for the negative electrode composition, and may be referred to as the negative electrode active material; the negative electrode conductive material; and the negative electrode binder, respectively.

The electrode composition (particularly, the negative electrode composition) according to the exemplary embodiment has a characteristic in which by using the electrode active material in the above range, using a specific conductive material and a specific binder, which can suppress the volume expansion rate in the charging and discharging process, the performance of the negative electrode does not deteriorate and output characteristics at charging and discharging are excellent even though the electrode active material is used in a range including the above range.

In an exemplary embodiment of the present specification, the silicon-containing active material may include one or more selected from the group consisting of SiOx (x=0), SiOx (0<x<2), SiC, and a Si alloy.

In an exemplary embodiment of the present specification, the electrode active material includes a silicon-containing active material, and the silicon-containing active material includes one or more selected from the group consisting of SiOx (x=0) and SiOx (0<x<2), and may include 70 parts by weight or more of the SiOx (x=0) based on 100 parts by weight of the silicon-containing active material.

In an exemplary embodiment of the present application, for the silicon-containing active material, only pure silicon (Si) may be used as the silicon-containing active material. The use of pure silicon (Si) as the silicon-containing active material may mean that based on the total 100 parts by weight of the silicon-containing active material as described above, pure Si particles (SiOx (x=0)), which are not bound to other particles or elements, are included in the above range.

In another exemplary embodiment, the silicon-containing active material may include the SiOx (x=0) in an amount of 70 parts by weight or more, preferably 80 parts by weight or more, and more preferably 90 parts by weight or more, or 100 parts by weight or less, preferably 99 parts by weight or less, and more preferably 95 parts by weight or less, based on 100 parts by weight of the silicon-containing active material.

In the present specification, despite a large amount of silicon-containing active material, the electrode composition including the silicon-containing active material in the above content range has significance in that by adjusting the pH of the binder, the generation amount of hydrogen gas caused by the silicon-containing active material is remarkably small.

In the present specification, the silicon-containing active material may be present, for example, in a crystalline or amorphous form. Specifically, the silicon particles of the silicon-containing active material may be preferably spherical particles, but are not limited thereto.

In the present specification, the case of SiO₂ where x is 2 in the SiOx is not included, but this SiO₂ does not react with lithium ions, and thus cannot store lithium. Therefore, it is preferred that x falls within the range of the exemplary embodiment.

In the present specification, the silicon-containing active material may be Si/C composed of a composite of Si and C, or Si.

In the present specification, two or more of the silicon-containing active materials may be used in mixture.

In an exemplary embodiment of the present specification, the carbon-containing active material may include one or more selected from the group consisting of artificial graphite, natural graphite, hard carbon, and soft carbon.

In an exemplary embodiment of the present specification, the conductive material may be included in an amount of 0.03 parts by weight or more and 40 parts by weight or less based on 100 parts by weight of the electrode composition.

In another exemplary embodiment of the present specification, the conductive material may be included in an amount of 0.03 parts by weight or more and 40 parts by weight or less, preferably 0.05 parts by weight or more and 30 parts by weight or less, and more preferably 0.5 parts by weight or more and 25 parts by weight or less, based on 100 parts by weight of the electrode composition.

In an exemplary embodiment of the present application, the conductive material may include one or more selected from the group consisting of a dotted conductive material, a planar conductive material, and a linear conductive material.

In an exemplary embodiment of the present specification, the conductive material may include a dotted conductive material and a linear conductive material.

In the present specification, the dotted conductive material may be used to enhance the conductivity of the negative electrode, and means a dot or sphere-shaped conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black and/or artificial graphite in terms of implementing high conductivity and being excellent in dispersibility.

In the present specification, the planar conductive material may increase the surface contact between silicon particles in the negative electrode to improve conductivity and simultaneously suppress the disconnection of the conductive path due to the volume expansion. The planar conductive material may be expressed as a plate-like conductive material or a bulk conductive material. Examples of the planar conductive material may include at least one selected from the group consisting of plate-like graphite, graphene, graphene oxide, and graphite flake, and may be preferably plate-like graphite.

In the present specification, the linear conductive material may be carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side in an alignment where longitudinal axes of the carbon nanotube units are substantially the same or intertwined. In the carbon nanotube unit, a graphite sheet has a cylindrical shape with a nano-sized diameter and has a sp² bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In another exemplary embodiment of the present specification, the conductive material may be a negative electrode conductive material.

In the present specification, the negative electrode conductive material is applied to the negative electrode, and has a completely different configuration from a positive electrode conductive material applied to the positive electrode. That is, the negative electrode conductive material serves to capture a contact point between silicon-containing active materials in which the volume expansion of the electrode is very large due to charging and discharging, whereas the positive electrode conductive material serves to impart partial conductivity while playing a buffer role as a cushioning role when roll-pressed, so that the negative electrode conductive material and the positive electrode conductive material have different structures and roles.

In an exemplary embodiment of the present application, the binder may be included in an amount of 2 parts by weight or more and 30 parts by weight or less based on 100 parts by weight of the electrode composition.

In another exemplary embodiment of the present specification, the binder may be included in an amount of 30 parts by weight or less, preferably 25 parts by weight or less, and more preferably 20 parts by weight or less, or may be included in an amount of 2 parts by weight or more, 5 parts by weight or more, and 10 parts by weight or more, based on 100 parts by weight of the electrode composition.

In still another exemplary embodiment of the present specification, the binder may be a negative electrode binder.

In an exemplary embodiment of the present specification, the binder may have a weight average molecular weight of 100,000 g/mol or more and 1,500,000 g/mol or less.

The electrode composition according to the exemplary embodiment has characteristics in that mechanical strength is excellent because the weight average molecular weight of the binder satisfies the above range, and the adhesion strength of the electrode is excellent because the interaction between molecules is high. Furthermore, when the above range is satisfied, the viscosity of the binder may be selected within an appropriate range, so that when a negative electrode is manufactured using the binder, the electrode has excellent coatability.

In an exemplary embodiment of the present specification, the binder may be an aqueous binder.

According to the exemplary embodiment, it is possible to further provide advantages in that when the aqueous binder is used in the electrode composition, dissolution is rapid, processability is facilitated, and efficiency is high, and when the aqueous binder is used in an electrode slurry in the future, viscosity can be stably controlled, long-term cycle can be secured, and high adhesive strength may be exhibited under various operating temperature conditions.

In the present specification, a polymerization initiator is used to prepare the aqueous binder, and ammonium persulfate may be used as an example of the polymerization initiator, but the polymerization initiator is not limited thereto.

### <Electrode slurry>

An exemplary embodiment of the present specification provides an electrode slurry including the above-described electrode composition and a solvent.

In another exemplary embodiment of the present invention, the solvent may include those known in the art. For example, the solvent may be water (for example: distilled water) or NMP, but is not limited thereto.

The electrode slurry of the present invention is a negative electrode slurry, and accordingly, the electrode composition may relate to a negative electrode slurry.

In some cases, when the viscosity of the electrode slurry is controlled within a suitable range by appropriately adjusting the average particle diameter (D50) of the silicon-containing active material or the specific surface area of the particles, the dispersion of constituent components (for example: a conductive material, a binder, a silicon-containing active material, a carbon-containing active material, and the like) in the slurry may be improved. Accordingly, the contact area between the constituent components is improved, so that the conductive network may be maintained, the capacity retention rate may be increased, and the current density non-uniformity phenomenon during charging/discharging may also be prevented.

Further, in some cases, the viscosity of the electrode slurry may be adjusted so as to be 5000 cps to 6000 cps. When the above viscosity range is satisfied, storability is excellent, and when one surface or both sides of the electrode current collector layer is or are coated with the electrode slurry in the future, coatability is excellent.

### <Electrode>

An exemplary embodiment of the present specification provides an electrode including: an electrode current collector layer; and an electrode active material layer in which the above-described electrode slurry is applied on one surface or both surfaces of the electrode current collector layer.

In another exemplary embodiment of the present specification, the electrode is a negative electrode, and accordingly, the electrode current collector layer, the electrode slurry, and the electrode active material layer all relate to the negative electrode.

In the present specification, the negative electrode current collector layer generally has a thickness of 1 µm to 100 µm. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In still another exemplary embodiment of the present specification, provided is a negative electrode for a lithium secondary battery, in which the negative electrode current collector layer has a thickness of 1 µm or more and 100 µm or less, and the negative electrode active material layer has a thickness of 20 µm or more and 500 µm or less.

However, the thickness may be variously modified depending on the type and use of the negative electrode used, and is not limited thereto.

### <Lithium Secondary Battery>

An exemplary embodiment of the present specification provides a lithium secondary battery including: a first electrode; a second electrode; a separator provided between the first electrode and the second electrode; and an electrolyte, in which any one of the first electrode or the second electrode is the above-described electrode.

The lithium secondary battery according to the exemplary embodiments may include, particularly, the above-described electrode.

Specifically, the first electrode may be a negative electrode and the second electrode may be a positive electrode, or the first electrode may be a positive electrode and the second electrode may be a negative electrode.

Specifically, the lithium secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Further, the positive electrode current collector may typically have a thickness of 3 µm to 500 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and CU₂V₂O₇; a Ni site type lithium nickel oxide expressed as chemical formula LiNi_{1-c2}M_{c2}O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-containing material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone (NMP), propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the lithium secondary battery as a unit cell, and a battery pack including the same. The battery module and the battery pack include the lithium secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

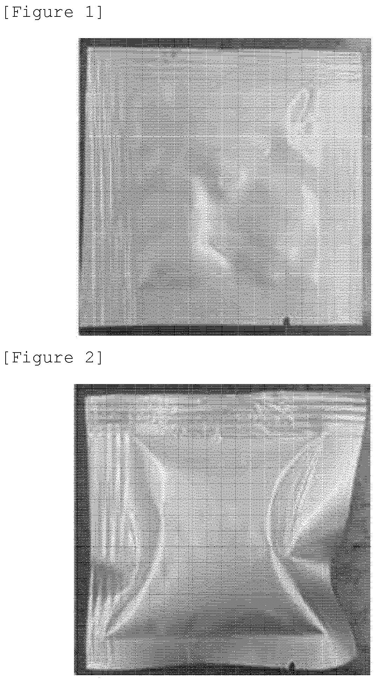

FIG. 1 is a photograph of a state after a certain period of time has passed after an electrode including an electrode composition according to an exemplary embodiment of the present application is stored, and FIG. 2 is a photograph of a state after a certain period of time has passed after an electrode including an electrode composition in the related art is stored. Although FIGS. 1 and 2 are the same in that both are stored for a certain period of time (about 24 hours) under high temperature conditions (about 60°C), it can be confirmed that in FIG. 1, there is almost no expansion due to a small amount of hydrogen gas generated, and in FIG. 2, the expansion is severe due to a large amount of hydrogen gas generated.

### <Preparation method of electrode composition>

In an exemplary embodiment of the present invention, provided is a method for preparing the above-described electrode composition, the method including: preparing a binder; adjusting the pH of the binder in a range of 5 or more and 7 or less using a base when measured at 25°C; and preparing the electrode composition by adding an electrode active material and a conductive material thereto and mixing the resulting mixture. In the present specification, the above-described contents apply to the binder, pH, electrode active material, conductive material, and the like.

### [Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

### Preparation Examples. Preparation of aqueous binder

### <Preparation Example 1>

In a reactor equipped with a stirrer, a thermometer, reflux condenser, and a nitrogen gas inflow tube, acrylamide (50% aqueous solution) and acrylic acid (AA, 80% aqueous solution) were used and mixed at a molar ratio of 7:3, ammonium persulfate as a polymerization initiator was added thereto, and then the resulting mixture was reacted at 80°C for 5 hours to prepare a water-based polymer (in an aqueous solution state).

Thereafter, a 0.1 molar (M) aqueous solution of NaOH was added dropwise to the water-based polymer to prepare a water-based linear binder with pH = 5.6.

### <Preparation Example 2>

A water-based linear binder was prepared in the same manner as Preparation Example 1, except that a water-based binder with pH = 6.6 was prepared.

### <Preparation Example 3>

A water-based binder was prepared in the same manner as in Preparation Example 1, except that acrylic acid (AA, 80% aqueous solution) and acrylonitrile (AN) were used and mixed at a molar ratio of 7:3 to prepare a water-based polymer, and then a water-based linear binder with pH = 5.3 was prepared.

### <Comparative Preparation Example 1>

A water-based linear binder was prepared in the same manner as Preparation Example 1, except that a water-based binder with pH = 8.0 was prepared.

### <Comparative Preparation Example 2>

A water-based linear binder was prepared in the same manner as Preparation Example 3, except that a water-based binder with pH = 7.8 was prepared.

### <Comparative Preparation Example 3>

A water-based linear binder was prepared in the same manner as Preparation Example 1, except that a water-based binder with pH = 4.0 was prepared.

### <Comparative Preparation Example 4>

An organic-based linear binder was prepared by mixing bicyclo[2,2,7]oct-2-ene-3,5,6,4-tetracarboxylic dianhydride (BCDA) and 4,10-oxydianiline (ODA) in an NMP solvent at a molar ratio of 1:1 and reacting the resulting mixture at 180°C for 4 hours. However, since pH needs to be measured under conditions different from those for other binders due to the characteristics of the organic-based binder, accurate pH values could not be measured.

### Examples. Preparation of electrode slurry

### <Example 1>

Si with d50 = 5.2 µm was used as a negative electrode active material, three types of conductive materials: carbon black (product name: Super C65 manufactured by TIMCAL Ltd.), artificial graphite (product name: SFG6L manufactured by TIMCAL Ltd.), and SWCNT were used as conductive materials, the water-based binder of Preparation Example 1 was used as a binder, and the resulting mixture was mixed so as to have Si : C65 : SFG6L : SWCNT : the binder = 80 : 2 : 7.5 : 0.5 : 10 (based on weight ratio), thereby preparing an electrode composition.

Thereafter, water was added as a solvent, and the content of water was adjusted in consideration of coatability, viscosity, and solid content such that the viscosity of the electrode slurry fell within a range of 5000 cps to 6000 cps.

### <Example 2>

An electrode slurry was prepared in the same manner as in Example 1, except that the water-based binder of Preparation Example 2 was used.

### <Example 3>

An electrode slurry was prepared in the same manner as in Example 1, except that the water-based binder of Preparation Example 3 was used.

### <Example 4>

An electrode slurry was prepared in the same manner as in Example 1, except that a negative electrode active material with artificial graphite (QCG-N2, manufactured by Shanshan) : Si = 90 : 10 was used.

### <Example 5>

An electrode slurry was prepared in the same manner as in Example 1, except that a negative electrode active material with artificial graphite : SiC (SD5100A, manufactured by Sila Nanotechnologies Inc.) = 85 : 15 was used.

### <Comparative Example 1>

An electrode slurry was prepared in the same manner as in Example 1, except that the water-based binder of Comparative Preparation Example 1 was used.

### <Comparative Example 2>

An electrode slurry was prepared in the same manner as in Example 1, except that the water-based binder of Comparative Preparation Example 2 was used.

### <Comparative Example 3>

An electrode slurry was prepared in the same manner as in Example 1, except that the water-based binder of Comparative Preparation Example 3 was used.

### <Comparative Example 4>

An electrode slurry was prepared in the same manner as in Comparative Example 1, except that a negative electrode active material with artificial graphite : Si = 90 : 10 was used.

### <Comparative Example 5>

An electrode slurry was prepared in the same manner as in Comparative Example 1, except that a negative electrode active material with artificial graphite : SiC = 85 : 15 was used.

### <Comparative Example 6>

An electrode slurry was prepared in the same manner as in Example 1, except that the organic binder of Comparative Preparation Example 4 was used.

### Experimental Examples.

### <Experiment Example 1: Measurement of amount of H₂ gas generated in electrode slurry>

5 g of each of the electrode slurries of Examples 1 to 5 and Comparative Examples 1 to 6 were put into a pouch having a size of 9 cm x 9 cm, and the pouches were sealed, and then left to stand in a constant temperature chamber at 60°C for 24 hours. Next, the gas generated in the pouch was captured, and the generation amount of H₂ gas generated was quantitatively analyzed using GC/MS (7890B-5977B). The results are shown in the following Table 1.

### <Experiment Example 2: Battery manufacturing and battery characteristic evaluation>

A copper foil with a thickness of 18 µm was coated with each of the electrode slurry and dried, an electrode active material layer with a thickness of 50 µm was formed on one surface of the copper foil, and the copper foil was punched into circular shapes with a diameter of 14 Φ (mm) to manufacture a test electrode (negative electrode). A metal lithium foil with a thickness of 0.3 mm was used as a positive electrode. A porous polyethylene sheet with a thickness of 0.1 mm was used as a separator. In addition, an electrolytic solution in which LiPF₆ as a lithium salt was dissolved at a concentration of about 1 mol/L in a mixed solvent of ethylene carbonate (EC) and diethyl carbonate (DEC) at a volume ratio of 1 : 1 was used as an electrolytic solution.

A coin cell for evaluation with a thickness of 2 mm and a diameter of 32 mm was manufactured by sealing the negative electrode, the positive electrode, the separator, and the electrolytic solution in a stainless steel container. The coin cell was charged with a constant current of 0.05 C until the voltage reached 0.01 V, and discharged with a constant current of 0.05 C until the voltage reached 1.5 V to determine the discharge capacity and initial efficiency, and thereafter, a capacity retention rate test was performed in the same voltage range as above at a constant current of 0.2 C for the cycle characteristics, and the results are shown in the following Table 1.

**[Table 1]**

| Experimental contents | **Example 1** | **Example 2** | **Example 3** | **Example 4** | **Example 5** | **Comparative Example 1** | **Comparative Example 2** | **Comparative Example 3** | **Comparative Example 4** | **Comparative Example 5** | **Comparative Example 6** |
|---|---|---|---|---|---|---|---|---|---|---|---|
| Binder type (pH) | Preparation Example 1 (5.6) | Preparation Example 2 (6.6) | Preparation Example 3 (5.3) | Preparation Example 1 (5.6) | Preparation Example 1 (5.6) | Comparative Preparation Example 1 (8.0) | Comparative Preparation Example 2 (7.8) | Comparative Preparation Example 3 (4.0) | Comparative Preparation Example 1 (8.0) | Comparative Preparation Example 1 (8.0) | Comparative Preparation Example 4 (Cannot be measured) |
| Electrode active material Type | Si | Si | Si | Artificial graphite: Si =90:10 | Artificial graphite: SiC 85:15 | Si | Si | Si | Artificial graphite: Si =90:10 | Artificial graphite: SiC 85:15 | Si |
| H₂ gas generation amount (µL) | 52 | 134 | 42 | 25 | 84 | 56,200 | 56,200 | 29 | 34, 600 | 42,500 | 20 |
| Capacity retention rate (%) | 85 | 86 | 81 | 79 | 84 | 84 | 80 | 45 | 78 | 82 | 62 |

As shown in Table 1, it can be seen that the batteries (Examples 1 to 5) using electrode slurries in which the pH of the binder satisfies a range of 5 to 7 have a smaller amount of hydrogen gas generated and simultaneously have an excellent cycle capacity retention rate compared to Comparative Examples 1 to 6. Specifically, in the case of Comparative Example 3 in which the pH of the binder was less than 5, the amount of hydrogen gas generated was low, but the capacity retention rate was very low even though Si was used as the electrode active material. Further, it can be seen that Comparative Examples 1, 2, 4, and 5 in which the pH of the binder exceeds 7 are not suitable as binders in that the amount of hydrogen gas generated is 34,600 µL or more even though the capacity retention rate is high at 78% or more. In addition, it can be seen that Comparative Example 6 in which the binder is an organic binder is not suitable as a binder because the capacity retention rate is very low at about 62% even though the amount of hydrogen gas generated is low.

## Claims

1. An electrode composition comprising:
an electrode active material;
a conductive material; and
a binder,
wherein the binder is composed of a linear polymer, and
the binder has a pH in a range of 5 or more and 7 or less at 25°C.

2. The electrode composition of claim 1, wherein the binder comprises a first monomer and a second monomer,
the first monomer comprises (meth)acrylic acid, and
the second monomer comprises one or more selected from the group consisting of (meth)acrylamide and (meth)acrylonitrile.

3. The electrode composition of claim 2, wherein a molar ratio of the first monomer to the second monomer is 2:8 to 8:2.

4. The electrode composition of claim 1, wherein the electrode active material is comprised in an amount of 60 parts by weight or more based on 100 parts by weight of the electrode composition.

5. The electrode composition of claim 1, wherein the electrode active material comprises one or more selected from the group consisting of a silicon-containing active material and a carbon-containing active material.

6. The electrode composition of claim 5, wherein the silicon-containing active material comprises one or more selected from the group consisting of SiOx, wherein x=0, SiOx, wherein 0<x<2, SiC, and a Si alloy.

7. The electrode composition of claim 5, wherein the electrode active material comprises the silicon-containing active material, and
the silicon-containing active material comprises one or more selected from the group consisting of 70 parts by weight or more of SiOx, wherein x=0, based on 100 parts by weight of the silicon-containing active material, and SiOx, wherein 0<x<2.

8. The electrode composition of claim 5, wherein the carbon-containing active material comprises one or more selected from the group consisting of artificial graphite, natural graphite, hard carbon, and soft carbon.

9. The electrode composition of claim 1, wherein the conductive material is comprised in an amount of 0.03 parts by weight or more and 40 parts by weight or less based on 100 parts by weight of the electrode composition.

10. The electrode composition of claim 1, wherein the conductive material comprises one or more selected from the group consisting of a dotted conductive material, a planar conductive material, and a linear conductive material.

11. The electrode composition of claim 1, wherein the binder is comprised in an amount of 2 parts by weight or more and 30 parts by weight or less based on 100 parts by weight of the electrode composition.

12. The electrode composition of claim 1, wherein the binder has a weight average molecular weight of 100,000 g/mol or more and 1,500,000 g/mol or less.

13. The electrode composition of claim 1, wherein the binder comprises a water-based binder.

14. An electrode slurry comprising the electrode composition according to claim 1 and a solvent.

15. An electrode comprising:
an electrode current collector layer; and
an electrode active material layer comprising the electrode slurry according to claim 14 on one surface or both surfaces of the electrode current collector layer.

16. A lithium secondary battery comprising:
a first electrode;
a second electrode;
a separator between the first electrode and the second electrode; and
an electrolyte,
wherein the first electrode or the second electrode is the electrode according to claim 15.

17. A method for preparing the electrode composition according to claim 1, the method comprising:
preparing the binder;
adjusting the pH of the binder to be in the range of 5 or more and 7 or less using a base; and
preparing the electrode composition by adding the electrode active material and the conductive material to the binder and mixing.
